# EUROPEAN PATENT APPLICATION

(11) **EP 3 909 798 A1**
(43) Date of publication of application: **17.11.2021**
(21) Application number: 20174528.8
(22) Date of filing: 13.05.2020
(51) Int. Cl.: B60K 11/02, F01P 11/02, F01P 5/10

(54) **DEGASSING TANK**

(71) Applicant: Illinois Tool Works, Inc., Glenview, Illinois 60025 (US)
(72) Inventor: IAFRATE, Serge, Illinois, 60025 (US); DUMAS, Pascal, Glenview, Illinois 60025 (US)
(74) Representative: HGF

(57) **Abstract**

A degassing tank for a cooling system of an automotive vehicle is disclosed. The degassing tank comprises a main wall defining an interior volume, the interior volume being partitioned into an inner degassing volume and an inner by-pass volume; at least two inlet ducts, passing through the main wall, for introducing heat transfer fluid into the inner by-pass volume; a degassing volume intake fluidly coupling the inner by-pass volume and the inner degassing volume for introducing heat transfer fluid to be degassed into the inner degassing volume from the inner by-pass volume; and at least two outlet ducts, for discharging heat transfer fluid from the degassing tank. The inner degassing volume is fluidly coupled to each of the at least two outlet ducts via a degassing volume discharge, and wherein the inner by-pass volume is fluidly coupled to each of the at least two outlet ducts via a by-pass volume discharge.

## Description

The present invention relates to a heat transfer fluid tank in particular, but not exclusively, a heat transfer fluid degassing tank.

### Background

A vehicle cooling system typically has numerous heat transfer fluid circuits for cooling components, such as a battery cooling circuit and a powertrain cooling circuit. The heat transfer fluid will also typically be circulated through a radiator or heat exchanger, to reduce the temperature of the heat transfer fluid. The heat transfer fluid will be circulated using pumps, and will typically circulate through degassing tanks, or expansion tanks, which contain inner volumes in which the heat transfer fluid is degassed.

Each cooling circuit may have a separate degassing tank and associated pump, or any number of degassing tanks may be used for any number of cooling circuits by circulating heat transfer fluid through numerous components from one degassing tank.

It is also sometimes necessary to cool one component at different temperatures, which typically requires separate cooling circuits. This could be, for example, to cool batteries during a load phase or when the vehicle is parked. Heat transfer fluid from the separate cooling circuits might be combined using valves to provide a specific heat transfer fluid temperature profile.

The inner volume of a degassing tank is usually partially filled with heat transfer fluid, such that air sits atop the heat transfer fluid in a free space. This free space allows the heat transfer fluid to thermally expand, in use, but also allows gases entrained within the heat transfer fluid to escape from the heat transfer fluid. Gas may become entrained in the flowing heat transfer fluid due to slight leaks in the circuit, for example at the the inlet of the pumps.

As different components require different cooling temperatures, the inner volumes of the degassing tanks can be increased or decreased to accommodate different temperatures of heat transfer fluid.

The heat transfer fluid flow rate through each of a battery cooling circuit and a powertrain cooling circuit might be as high as 20 litres/minute (l/min). If one degassing tank were to be used for two such circuits, the flow rate through the degassing tank might be as high as 40 I/min. At such high flow rates, the degassing tank cannot degas the heat transfer fluid effectively, due to turbulence in the heat transfer fluid and air which is inhaled at the outlets due to lower pressure in the degassing tank than in the outlet pipe.

It is possible to provide a bypass hose for transferring only part of the flow volume of heat transfer fluid to the degassing tank. However, this may cause issues with reliability, as the hose may perish or become disconnected. The bypass hose would also occupy more space in the cooling system, and would increase costs of manufacture, installation and maintenance.

It would be advantageous to produce a degassing tank that helps overcome the above described problems, to provide a compact tank which degasses heat transfer fluid from one or more cooling circuits.

### Summary of the Invention

According to a first aspect of the present invention there is provided a degassing tank for a cooling system of an automotive vehicle, the degassing tank comprising a main wall defining an interior volume, the interior volume being partitioned into an inner degassing volume and an inner by-pass volume; at least two inlet ducts, passing through the main wall, for introducing heat transfer fluid into the inner by-pass volume; a degassing volume intake fluidly coupling the inner by-pass volume and the inner degassing volume for introducing heat transfer fluid to be degassed into the inner degassing volume from the inner by-pass volume; and at least two outlet ducts, for discharging heat transfer fluid from the degassing tank; wherein the inner degassing volume is fluidly coupled to each of the at least two outlet ducts via a degassing volume discharge, and wherein the inner by-pass volume is fluidly coupled to each of the at least two outlet ducts via a by-pass volume discharge.

Heat transfer fluid may be degassed in the degassing volume of the degassing tank. Gas released from the heat transfer fluid may be released through a relief valve in the main wall of the degassing tank.

Each inlet duct of the at least two inlet ducts may correspond to a separate heat transfer fluid flow circuit. Each outlet duct of the at least two outlet ducts may correspond to a separate heat transfer fluid flow circuit.

Heat transfer fluid from at least two separate fluid flow circuits may be mixed in the degassing tank. The mixing of heat transfer fluid from at least two separate fluid flow circuits may facilitate heat transfer between the fluids from at least two separate fluid flow circuits.

The inner degassing volume and the inner by-pass volume may be partitioned by a partition wall. The partition wall may comprise an upper section and a lower section, wherein the edges of the upper section and lower section adjoin or abut.

The main wall may comprise a cover and a base. The upper section of the partition wall may be integral with the cover and the lower section may be integral with the base. The cover may be attached to the base.

The relief valve may be located in the cover. The relief valve may be located in a closure cap. The closure cap may close an aperture to the inner degassing volume. The closure cap may be removed to introduce heat transfer fluid to the degassing tank through the aperture.

The degassing volume intake may comprise a supply duct. The supply duct may be configured such that fluid enters the supply duct from the inner by-pass volume at a first end. The supply duct may extend into the inner degassing volume to a second end. In use, fluid may enter the inner degassing volume from the supply duct at or near to the second end. The supply duct may comprise an upper and a lower section. Each upper and lower section of the supply duct may be formed integrally with the upper and lower section of the partition wall respectively. The upper and lower sections of the supply duct may adjoin or abut.

The degassing tank may comprise a by-pass volume flow diverter. The by-pass volume flow diverter may be located in the inner by-pass volume. The by-pass volume flow diverter may be located between the first end of supply duct and each by-pass volume discharge.

The degassing tank may comprise a degassing volume flow diverter. The degassing volume flow diverter may be located in the degassing volume. The degassing volume flow diverter may be located between the second end of the supply duct and each degassing volume discharge.

In a further embodiment an auxiliary inlet duct may be fluidly coupled to the supply duct of the degassing tank. The auxiliary inlet duct may pass through the main wall of the degassing tank. The auxiliary duct may be connected or connectable to a radiator.

The degassing tank may be manufactured in two halves, one half may comprise the cover and the other half may comprise the base. The cover and the base may be joined by welding or by using adhesive.

In a further embodiment, an automotive vehicle comprises a cooling system, the cooling system comprises at least one heat transfer fluid circuit and the degassing tank.

A further embodiment provides a method of degassing heat transfer fluid in a degassing tank, the degassing tank having an interior volume defined by a main wall of the degassing tank and being partitioned into an inner by-pass volume and an inner degassing volume, the method comprising introducing heat transfer fluid to the inner by-pass volume through at least two inlet ducts passing through the main wall; introducing heat transfer fluid to the inner degassing volume from the inner by-pass volume through a degassing volume intake; and discharging heat transfer fluid from the degassing tank via at least two outlet ducts; wherein heat transfer fluid is discharged from the inner degassing volume through the at least two outlet ducts via degassing volume discharges, and heat transfer fluid is discharged from the inner by-pass volume through the at least two outlet ducts via by-pass volume discharges.

A further embodiment provides a method of degassing heat transfer fluid for a cooling system of an automotive vehicle, the degassing of heat transfer fluid being in an interior volume of a degassing tank, the interior volume being defined by a main wall of the degassing tank and being partitioned into an inner by-pass volume and an inner degassing volume, the method comprising introducing heat transfer fluid to the inner by-pass volume through at least two inlet ducts passing through the main wall; introducing heat transfer fluid to the inner degassing volume from the inner by-pass volume through a degassing volume intake; and discharging heat transfer fluid from the degassing tank via at least two outlet ducts; wherein heat transfer fluid is discharged from the inner degassing volume through the at least two outlet ducts via degassing volume discharges, and heat transfer fluid is discharged from the inner by-pass volume through the at least two outlet ducts via by-pass volume discharges.

The inner degassing volume may be filled with heat transfer fluid to a nominal level and held under pressure, to encourage degassing of the heat transfer fluid therein.

Gas released from the heat transfer fluid in the inner degassing volume may be released from the degassing tank through a relief valve located in the main wall of the degassing tank. The relief valve may be located in a closure cap and the closure cap may close an aperture through which heat transfer fluid can be introduced to the degassing tank. The closure cap may be located in the cover of the degassing tank.

Heat transfer fluid introduced through each inlet duct of the at least two inlet ducts may be from a separate heat transfer fluid flow circuit. Heat transfer fluid discharged from each outlet duct of the at least two outlet ducts may be to a separate heat transfer fluid flow circuit.

Heat transfer fluid may be introduced to a supply duct from the inner by-pass volume at a first end. Heat transfer fluid may enter the inner degassing volume from the supply duct at or near to a second end.

Heat transfer fluid entering the inner by-pass volume from each by-pass volume discharge may be directed by a by-pass volume flow diverter, which may be located in the inner by-pass volume. The by-pass volume flow diverter may be located between each by-pass volume discharge and the first end of supply duct, the by-pass volume flow diverter directing fluid away from the first end of the supply duct.

Heat transfer fluid entering the inner degassing volume from the second end of the supply duct may be directed by a degassing volume flow diverter, which may be located in the inner degassing volume. The degassing volume flow diverter may be located between each degassing volume discharge and the second end of supply duct, the degassing volume flow diverter directing fluid away from each degassing volume discharge.

Heat transfer may occur in the inner by-pass volume, due to mixing between the heat transfer fluid from a first cooling circuit, and heat transfer fluid from at least one more cooling circuit.

In a further embodiment heat transfer fluid may be introduced to the supply duct via an auxiliary inlet duct. The auxiliary inlet duct may be located though the main wall of the degassing tank, and heat transfer fluid may be introduced near to the first end of the supply duct.

These embodiments of the degassing tank allow mixing of the heat transfer fluid in the by-pass volume from a plurality of cooling circuits, which encourages heat transfer therebetween. Furthermore, by diverting heat transfer fluid from the by-pass volume to the degassing volume, a sufficiently high flow rate can be maintained through the by-pass volume such as to cool the components in the cooling circuits, whilst a sufficiently low flow rate can be maintained through the degassing volume to degass the heat transfer fluid therein. The degassing tanks of these embodiments are simple to manufacture.

### Brief Description of the drawings

Embodiments of the invention are further described hereinafter with reference to the accompanying drawings, in which:
**Fig. 1** illustrates an isometric view of a degassing tank according to the invention;
**Fig. 2** illustrates a front view of the degassing tank of Figure 1;
**Fig. 3** illustrates a top view of the degassing tank of Figure 1, with the top portion removed;
**Fig. 4** illustrates a section view of the degassing tank along line A-A of Figure 2;
**Fig. 5** illustrates a section view of the degassing tank along line B-B of Figure 4;
**Fig. 6** illustrates the by-pass volume of the degassing tank of Figure 1;
**Fig. 7** illustrates the degassing volume of the degassing tank of Figure 1;
**Fig. 8** illustrates a cooling circuit with a degassing tank according to the invention; and
**Fig. 9** illustrates a cooling circuit with a degassing tank according to another aspect of the invention.

In the drawings like reference numerals refer to like parts.

### Detailed Description

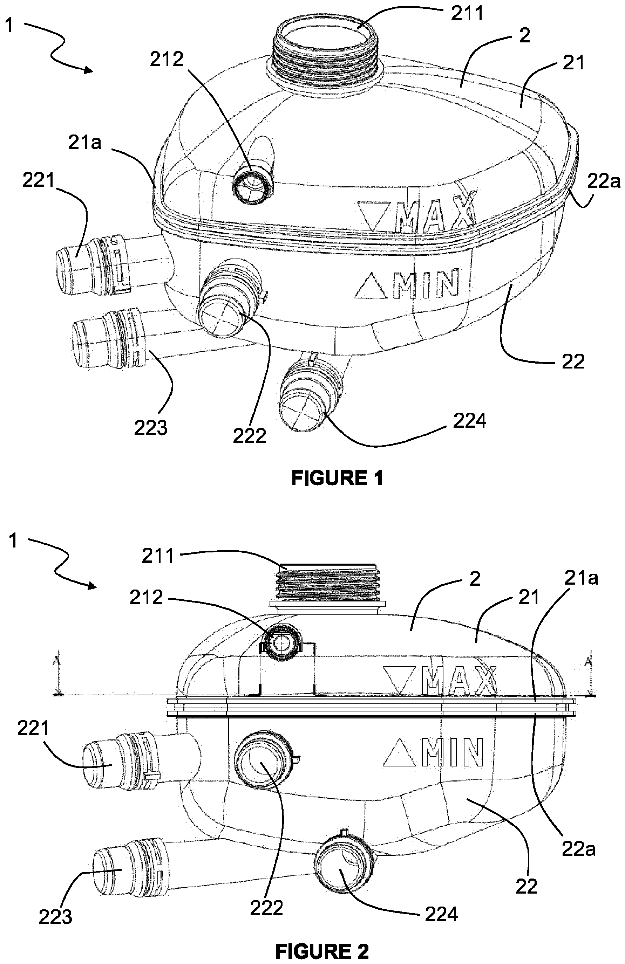

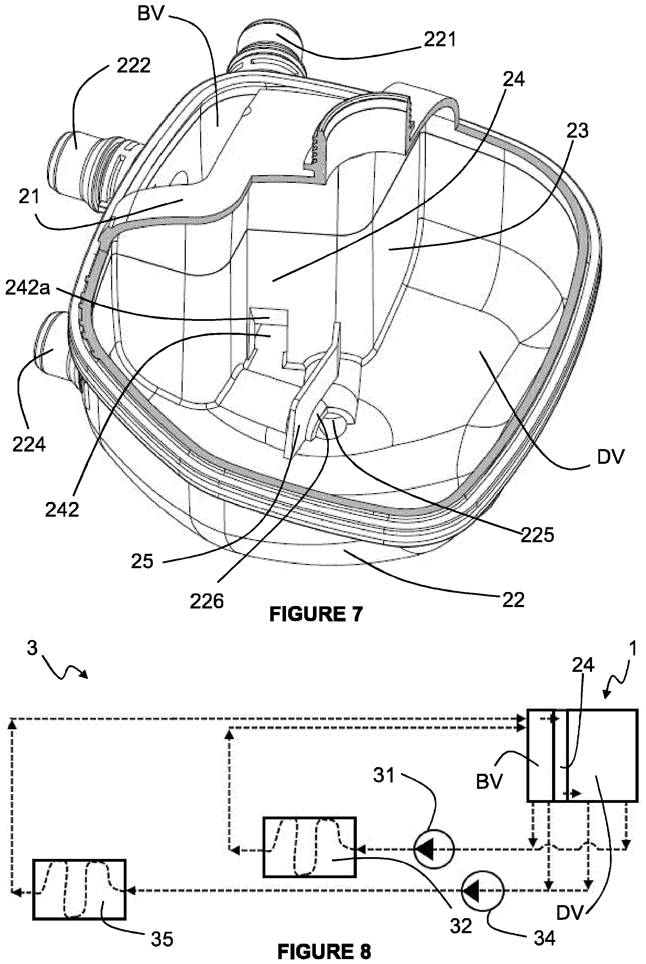

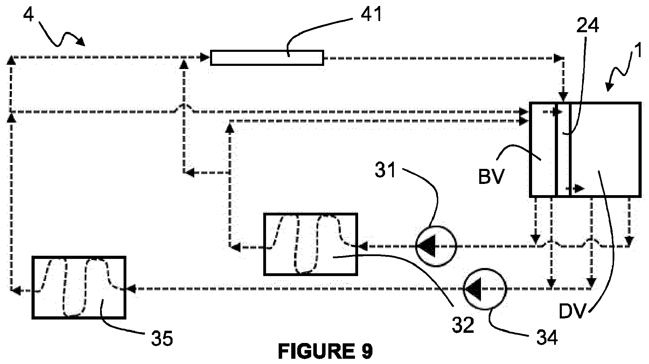

Figures 1 to 7 illustrate an example embodiment of a degassing tank 1 for use with a vehicle, for example an automotive vehicle. The vehicle may be, for example, an automobile, a train, an aeroplane, a ship. Figures 8 and 9 illustrates example heat transfer fluid flow circuits including the degassing tank 1.

Referring specifically to Figures 1 and 2, the degassing tank 1 has a main wall 2 which defines an interior volume.

In this example, the main wall 2 has a cover 21 and a base 22. The cover 21 and base 22 each form a pocket. A bottom edge 21a of the cover 21 and a top edge 22a of the base 22 are adjoined (e.g. by welding) to provide the main wall 2 and to define the interior volume. In use, the interior volume contains a heat transfer fluid.

The orientation of the degassing tank 1 in Figures 1 and 2 is the preferred orientation of the degassing tank 1 in use. Reference made herein to 'top', 'bottom', 'vertical', 'horizontal' and 'side', or similar expressions, are relative to this preferred orientation.

In this example, the cover 21 has a neck 211 which surrounds an aperture through the main wall 2. The aperture is used to introduce heat transfer fluid in to the degassing tank 1 and to release gas from the degassing tank 1. The neck may be configured in any suitable manner. In this example, the neck 211 is orientated substantially vertically. The neck 211 has a threaded outside surface for receiving a closure cap (not shown). The closure cap comprises a relief valve which is configured to release gas from the degassing tank at a predetermined pressure. The neck 211 is integral with the cover 21 of the main wall 2.

In this example, there is an optional radiator duct 212 extending through the cover 21. The radiator duct 212 is for the introduction of heat transfer fluid from a radiator (not shown) of the automobile. The optional radiator duct 212 is orientated substantially horizontally.

The degassing tank 1 includes at least two inlet ducts passing through the main wall 2, for introducing heat transfer fluid into the degassing tank 1. The degassing tank 1 further includes at least two outlet ducts for discharging heat transfer fluid from the degassing tank 1. In this example, each inlet duct corresponds to a separate heat transfer fluid flow circuit, for example a cooling circuit. Similarly, each outlet duct corresponds to a separate cooling circuit.

In the illustrated example, the degassing tank 1 includes a first inlet duct 221 and a first outlet duct 223. In this example, the first inlet duct 221 and first outlet duct 223 are positioned in the base 22 of the degassing tank 1. The first inlet duct 221 and first outlet duct 223 are fluidly coupled to a first cooling circuit (not shown). The first outlet duct 223 is fluidly coupled to the inlet of the first cooling circuit and the first inlet duct 221 is fluidly coupled to the outlet of the first cooling circuit. The heat transfer fluid flows around the first cooling circuit to remove heat from a first system (not shown), e.g. the batteries.

The degassing tank 1 includes a second inlet duct 222 and a second outlet duct 224. In this example, the second inlet duct 222 and second outlet duct 224 are positioned in the base 22 of the degassing tank 1. The second inlet duct 222 and second outlet duct 224 are fluidly coupled to a second cooling circuit (not shown). The second outlet duct 224 is fluidly coupled to the inlet of the second cooling circuit and the second inlet duct 222 is fluidly coupled to the outlet of the second cooling circuit. The heat transfer fluid flows around the second cooling circuit to remove heat from a second system (not shown), e.g. the powertrain.

The cooling circuits can be for any system in the automotive vehicle. The heat transfer fluid is for example a cooling liquid. The heat transfer fluid is preferably of a glycolated water type. However, any cooling fluid can be used.

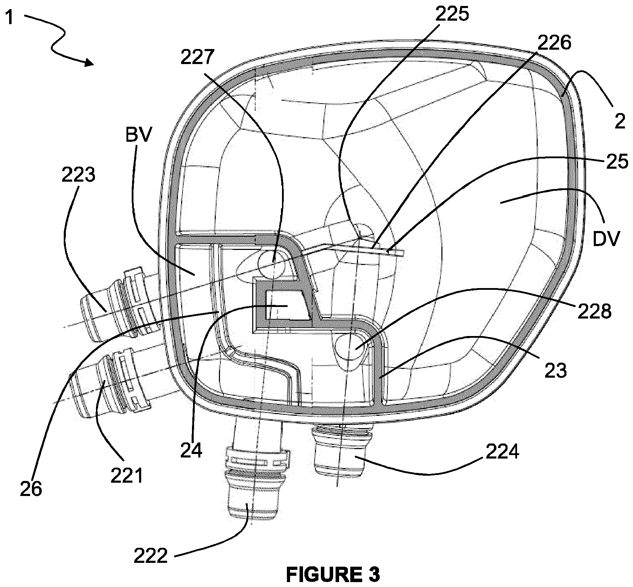

Referring now to Figure 3, there is shown a top view of the degassing tank 1 with the cover 21 removed.

The interior volume of the degassing tank 1 is partitioned, or separated / divided, into a degassing volume DV and a by-pass volume BV. The degassing volume DV and the by-pass volume BV are separated by a partition wall 23. The degassing volume DV is defined by the cover 21, the base 22, and the partition wall 23. The by-pass volume BV is defined by the cover 21, the base 22, and the partition wall 23. The partition wall 23 extends between the cover 21 and the base 22. In this example, the plane of the partition wall 23 is substantially vertical.

In this example, the partition wall 23 is formed of an upper, or top, section and a lower, or bottom, section. The top section is integral with the cover 21 of the main wall 2 and has a bottom edge (not shown) which is substantially coplanar with the bottom edge 21a of the cover 21. The bottom section is integral with the base 22 of the main wall 2 and has a top edge (not shown) which is substantially coplanar with the top edge 22a of the base 22. When the cover 21 and the base 22 of the main wall 2 are brought into an abutting arrangement, the bottom and top edges of the partition wall 23 abut and can then be subsequently adjoined (for example by welding).

The first and second inlet ducts 221, 222 are fluidly coupled to the by-pass volume BV so as to allow heat transfer fluid to be introduced into the inner by-pass volume BV. The first and second inlet ducts 221, 222 are pipes which, in this example, are attached to the base 22 of the main wall 2, with corresponding apertures extending through the main wall 2 for the passage of heat transfer fluid. In this example, the first and second inlet ducts 221, 222 are substantially horizontal.

The first and second outlet ducts 223, 224 are fluidly coupled to the degassing volume DV via respective first and second degassing volume discharges or outlets 225, 226. In this example, the first and second degassing volume discharges 225, 226 are adjacent each other. The first and second outlet ducts 223, 224 are fluidly coupled to the by-pass volume BV via respective first and second by-pass volume discharges or outlets 227, 228. In this example, the first and second outlet ducts 223, 224 extend from the base 22 of the main wall 2 in a position adjacent a lower portion, or bottom, of the base 22.

The degassing tank 1 further includes a degassing volume intake fluidly coupling the by-pass volume BV and the degassing volume DV for introducing heat transfer fluid to be degassed into the degassing volume DV from the by-pass volume BV. In this example, the degassing volume intake is a supply duct or dip tube 24 between the by-pass volume BV and the degassing volume DV.

In this example, the dip tube 24 extends between the cover 21 and the base 22. The dip tube 24 is rectilinear in cross-section and is adjacent to the partition wall 23. The partition wall 23 defines one wall of the dip tube 24.

In the same manner as with the partition wall 23, the dip tube 24 is formed of an upper, or top, section and a lower, or bottom, section each formed integrally with the upper and lower section of the partition wall respectively, such that the upper and lower sections of the dip tube 24 abut when the cover 21 and the base 22 of the main wall 2 are brought into an abutting arrangement.

In this example, a degassing volume flow diverter (or baffle) 25 is located in the degassing volume DV, which directs heat transfer fluid towards the centre of the degassing volume DV upon entering the degassing volume DV from the dip tube 24. The degassing volume flow diverter 25 also encourages turbulence in the heat transfer fluid flow in the degassing volume DV. The degassing volume flow diverter 25 extends partially into the degassing volume DV from the bottom of the base 22 of the main wall 2. The degassing volume flow diverter 25 extends from the partition wall 23. The degassing volume flow diverter 25 is located between the second degassing volume discharge 226 and the partition wall 23. The plane of the degassing volume flow diverter 25 is substantially vertical.

In this example, a by-pass volume flow diverter 26 (or baffle) is located in the by-pass volume BV which directs heat transfer fluid upwards upon entering the by-pass volume BV from the inlet ducts 221, 222. The by-pass volume flow diverter 26 also encourages turbulence in the heat transfer fluid flow in the by-pass volume BV. The by-pass volume flow diverter 26 extends into the by-pass volume BV from the bottom of the base 22 to a position, or elevation, above the first and second inlet ducts 221, 222 (that is, above the position at which the first and second inlet ducts 221, 222 pass through the main wall 2). The by-pass volume flow diverter 26 is located between the first and second inlet ducts 221, 222 and the first and second by-pass volume discharges 227, 228. In this example, the by-pass volume flow diverter 26 extends between a side of the base 22 and the partition wall 23. The plane of the by-pass volume flow diverter 26 is substantially vertical.

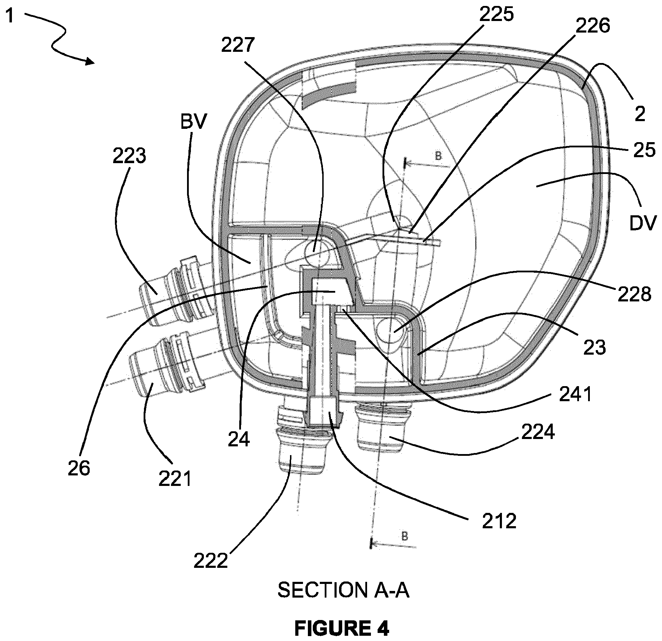

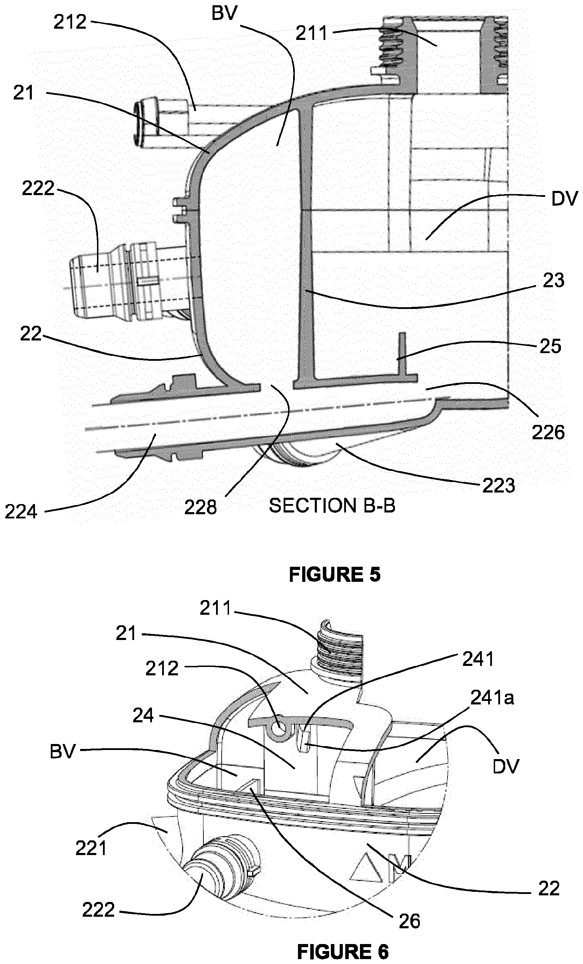

Referring now to Figures 4 and 5, there are shown section views of the degassing tank 1. Figure 4 shows a section view along line A-A of Figure 2. Figure 5 shows a section view along line B-B of Figure 4.

In this example, the dip tube 24 includes a dip tube inlet 241 extending through a wall of the dip tube 24. The dip tube inlet 241 fluidly couples the dip tube 24 and the by-pass volume BV. In this example, the dip tube inlet 241 is located at a first, upper, end of the dip tube 24. Specifically, the dip tube inlet 241 is located adjacent the cover 21 of the main wall 2.

In this example, the optional radiator duct 212 is fluidly coupled to the dip tube 24. The optional radiator duct 212 joins the dip tube 24 proximate the intersection between the dip tube 24 and the cover 21. The axis of the optional radiator duct 212 is substantially horizontally aligned.

The neck 211 is fluidly coupled to the degassing volume DV. The neck 211 is located topmost of the degassing volume DV.

Referring now to Figure 6 there is shown a cut-away view the by-pass volume BV, with sections of the cover 21 of the main wall 2 removed for illustrative purposes. In this example, the dip tube inlet 241 is an elongated aperture. The bottom side of the dip tube inlet 241 has a taper 241a, which tapers from the inside to the outside of the dip tube 24, in a direction from the cover 21 towards the base 22.

Referring now to Figure 7, there is shown a cut-away view of the degassing volume DV, with sections of the cover 21 of the main wall 2 removed for illustrative purposes.

In this example, the dip tube 24 includes a dip tube outlet 242 extending through a wall of the dip tube 24. The dip tube outlet 242 fluidly couples the dip tube 24 and the degassing volume DV. In this example, the dip tube outlet 242 is located at a second, lower, end of the dip tube 24. Specifically, the dip tube outlet 242 is located adjacent the base 22 of the main wall 2. The dip tube outlet 242 is an elongated aperture. The top side of the dip tube outlet 242 has a taper 242a, which tapers from the inside to the outside of the dip tube 24, in a direction from the base 22 to the cover 21.

The degassing tank 1 is preferably manufactured using a polymeric material. The degassing tank is preferably moulded in two halves, where one mould half includes the cover 21, and the other mould half includes the base 22. This is a low cost and reliable manufacturing method. Also, by manufacturing the degassing tank in two mould halves, the risk of leaks is reduced.

The typical operation of the degassing tank 1 is now described.

The degassing volume DV is partially filled with a heat transfer fluid up to a nominal level (for example between the 'MAX' and 'MIN' markers, which are visible in Figures 1 and 2. In this example, the nominal level is proximate the edges 21a, 22a of the top and bottom portions 21, 22. The space above the heat transfer fluid provides an expansion volume. The heat transfer fluid in the degassing volume DV is held under pressure to promote degassing. The closure cap (not shown) is attached to the neck 211 and releases gases from the expansion volume at a predetermined pressure. As the neck 211 is located topmost on the main wall 2, the closure cap releases gases but does not come into prolonged contact with the heat transfer fluid, which rests on the bottom of the degassing volume DV.

The main wall 2 of the degassing tank 1 is preferably translucent or transparent. As such, the level of heat transfer fluid in the degassing volume DV can be monitored easily. If the level of heat transfer fluid is below the 'MIN' marker, the closure cap is removed from the neck 211, and more heat transfer fluid is introduced to the degassing volume DV through the aperture in the neck 211.

Initially, the by-pass volume BV is at least partially filled with heat transfer fluid. The heat transfer fluid in the by-pass volume BV is under pressure. In use, heat transfer fluid enters the by-pass volume BV via the first and second inlet ducts 221, 222 and the by-pass volume flow diverter 26 directs heat transfer fluid upwards. The by-pass volume flow diverter 26, located between the inlet ducts 221, 222 and the first and second by-pass volume discharges 227, 228, prevents the direct flow of heat transfer fluid from the first and second inlet ducts 221, 222 to the first and second by-pass volume discharges 227, 228. Instead the heat transfer fluid must flow up and over the by-pass volume flow diverter 26. The by-pass volume flow diverter 26 also encourages mixing of the heat transfer fluid.

Some heat transfer fluid passes through the dip tube inlet 241 into the dip tube 24. This heat transfer fluid mixes with heat transfer fluid which enters the dip tube 24 via the optional radiator duct 212, if present. The mixed heat transfer fluid in the dip tube 24 exits the dip tube 24 via the dip tube outlet 242 and enters the degassing volume DV.

The degassing volume flow diverter 25, located between the dip tube outlet 242 and each degassing volume discharge 225, 226, prevents heat transfer fluid from flowing directly from the dip tube outlet 242 to the degassing volume discharges 225, 226. In particular, heat transfer fluid entering the degassing volume DV via the dip tube outlet 242 is directed upwards via the degassing volume flow diverter 25 or around the degassing volume flow diverter 25 before arriving at the first and second degassing volume discharges 225, 226. The degassing volume flow diverter 25 also encourages turbulent flow inside of the degassing volume DV which encourages mixing and degassing of the heat transfer fluid.

Degassed heat transfer fluid enters the first and second outlet ducts 223, 224 via the respective first and second degassing volume discharges 225, 226. Heat transfer fluid also enters the first and second outlet ducts 223, 224 via the respective first and second by-pass volume discharges 227, 228. That is, each of the first and second outlet ducts 223, 224 is coupled by outlets, or discharges, to each of the by-pass volume BV and the degassing volume DV.

The amount of heat transfer fluid to be degassed is controlled by the dimensions of the dip tube inlet 241. If the dip tube inlet 241 is larger, more heat transfer fluid will transfer from the by-pass volume BV to the degassing volume DV, and so be degassed.

In this example, the combined cross-sectional area of the first and second inlet ducts 221, 222 is significantly smaller than the cross-sectional area of the by-pass volume BV. As such, heat transfer fluid entering the by-pass volume BV slows down. The slower flow velocity reduces the temperature of the heat transfer fluid in the by-pass volume. The by-pass volume flow diverter 26 prevents heat transfer fluid from flowing directly to the by-pass volume discharges 227, 228. This means that heat transfer fluid is in the by-pass volume BV for a greater amount of time and so cools more before being recirculated. The by-pass volume flow diverter 26 also causes mixing of the heat transfer fluid from the first and second inlets 221, 222. As the heat transfer fluid entering the by-pass volume is at different temperatures (or at least likely to be at different temperatures), mixing of the heat transfer fluid cools the fluid with a higher temperature to achieve a more homogenous temperature profile within the by-pass volume. Furthermore, mixing of the heat transfer fluid increases the amount of fluid that contacts the main wall 2 of the degassing tank 1, and so more heat is lost through the main wall 2, further cooling the heat transfer fluid. If the degassing tank 1 is connected to a radiator, then the heat transfer fluid entering the dip tube 24 from the by-pass volume BV is cooled due to mixing with the heat transfer fluid from the radiator.

Heat transfer fluid in the degassing volume DV is cooled due to the large volume of the degassing volume DV. The temperature of the heat transfer fluid in each outlet duct 223, 224 is controlled by the ratio of the cross-sectional area of the respective degassing volume discharge 225, 226 to the cross-sectional area of the respective by-pass volume discharge 227, 228. As this ratio is increased, the temperature of the heat transfer fluid in the respective outlet duct 223, 224 is decreased.

Referring now to Figure 8, an exemplary cooling circuit 3 is shown. The degassing tank 1 with a degassing volume DV, a by-pass volume BV and a dip tube 24 is shown schematically. The flow of heat transfer fluid is shown by the dashed arrows.

Heat transfer fluid exits the degassing volume DV via the first degassing volume discharge 225 and flows into the first outlet duct 223. Heat transfer fluid exits the by-pass volume BV via the first by-pass volume discharge 227 and flows into the first outlet duct 223. The heat transfer fluid in the first outlet duct 223 is pumped by a first pump 31 to a cool a first system 32. After flowing through the first system 32, the heat transfer fluid flows to the first inlet duct 221 of the degassing tank 1, and then into the by-pass volume BV.

Heat transfer fluid exits the degassing volume DV via the second degassing volume discharge 226 and flows into the second outlet duct 224. Heat transfer fluid exits the by-pass volume BV via the second by-pass volume discharge 228 and flows into the second outlet duct 224. The heat transfer fluid in the second outlet duct 224 is pumped by a second pump 34 to cool a second system 35. After flowing through the second system 35, the heat transfer fluid flows to the second inlet duct 222 of the degassing tank 1, and then into the by-pass volume BV.

Some heat transfer fluid in the by-pass volume BV flows into the dip tube 24, and then into the degassing volume DV.

The flow rate of fluid in each cooling circuit may be up to 20 litres per minute. Accordingly, the flow rate through the degassing tank 1 is 40 litres per minute. The provision of a separate degassing volume DV and by-pass volume BV means that the flow rate through the degassing volume DV can be sufficiently low to allow successful degassing of the heat transfer fluid.

Referring now to Figure 9, an exemplary cooling circuit 4 is shown, which has a degassing tank 1 with an optional radiator duct 212, the radiator duct 212 being in fluid communication with a radiator 41.

The operation of the cooling circuit 4 is the same as that shown in Figure 8, with the exception that some of the heat transfer fluid flowing out of each of the first and second system 32, 35 flows to the radiator 41. The remainder of heat transfer fluid from each system 32, 35, flows to the by-pass volume BV.

That is, heat transfer fluid flows through the radiator 41 from the first and second systems 32, 35. Heat transfer fluid flows out of the radiator 41, into the radiator inlet 212 of the degassing tank 1, and then into the dip tube 24.

It will be appreciated by those skilled in the art that several variations to the aforementioned embodiments are envisaged without departing from the scope of the invention. For example, there may be any number of inlet ducts and outlet ducts. The number of inlets may not be equal to the number of outlets. The degassing tank may be made from other materials such as stainless steel or aluminium. The dip tube might be omitted such that heat transfer fluid can flow directly between the by-pass volume and the degassing volume. The by-pass flow diverter and/or the degassing flow diverter might be a different size and/or shape or might be omitted altogether.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A degassing tank for a cooling system of an automotive vehicle, the degassing tank comprising:
a main wall defining an interior volume, the interior volume being partitioned into an inner degassing volume and an inner by-pass volume;
at least two inlet ducts, passing through the main wall, for introducing heat transfer fluid into the inner by-pass volume;
a degassing volume intake fluidly coupling the inner by-pass volume and the inner degassing volume for introducing heat transfer fluid to be degassed into the inner degassing volume from the inner by-pass volume; and
at least two outlet ducts, for discharging heat transfer fluid from the degassing tank;
wherein the inner degassing volume is fluidly coupled to each of the at least two outlet ducts via a degassing volume discharge, and wherein the inner by-pass volume is fluidly coupled to each of the at least two outlet ducts via a by-pass volume discharge.

2. A degassing tank according to claim 1, wherein each inlet duct of the at least two inlet ducts corresponds to a separate heat transfer fluid flow circuit.

3. A degassing tank according to any preceding claim, wherein each outlet duct of the at least two outlet ducts corresponds to a separate heat transfer fluid flow circuit.

4. A degassing tank according to any preceding claim, wherein the inner degassing volume and the inner by-pass volume are partitioned by a partition wall.

5. A degassing tank according to claim 4, wherein the partition wall comprises an upper section and a lower section, wherein the edges of the upper section and lower section adjoin or abut.

6. A degassing tank according to any preceding claim, wherein the main wall comprises a cover and a base.

7. A degassing tank according to claim 6 when dependent upon claim 5, wherein the upper section of the partition wall is integral with the cover and the lower section is integral with the base, the cover being attached to the base.

8. A degassing tank according to any preceding claim, wherein the degassing volume intake comprises a supply duct.

9. A degassing tank according to claim 8, wherein the supply duct is configured such that fluid enters the supply duct from the inner by-pass volume at a first end.

10. A degassing tank according to any of claims 8 or 9, wherein the supply duct extends into the inner degassing volume to a second end, wherein, in use, fluid enters the inner degassing volume from the supply duct at or near to the second end.

11. A degassing tank according to any of claims 8 to 10, when dependent upon any of claims 5 to 7 wherein the supply duct comprises an upper and a lower section, each being formed integrally with the upper and lower section of the partition wall respectively, such that the upper and lower sections of the supply duct adjoin or abut.

12. A degassing tank according to any of claims 9 to 11, wherein the degassing tank comprises a by-pass volume flow diverter located in the inner by-pass volume between the inlet ducts and each by-pass volume discharge.

13. A degassing tank according to any of claims 10 to 12, wherein the degassing tank comprises a degassing volume flow diverter located in the inner degassing volume between the second end of the supply duct and each degassing volume discharge.

14. An automotive vehicle comprising a cooling system, the cooling circuit comprising at least one heat transfer fluid circuit and a degassing tank according to any preceding claim.

15. A method of degassing heat transfer fluid in a degassing tank, the degassing tank having an interior volume defined by a main wall of the degassing tank and being partitioned into an inner by-pass volume and an inner degassing volume, the method comprising:
introducing heat transfer fluid to the inner by-pass volume through at least two inlet ducts passing through the main wall;
introducing heat transfer fluid to the inner degassing volume from the inner by-pass volume through a degassing volume intake; and
discharging heat transfer fluid from the degassing tank via at least two outlet ducts;
wherein heat transfer fluid is discharged from the inner degassing volume through the at least two outlet ducts via degassing volume discharges, and heat transfer fluid is discharged from the inner by-pass volume through the at least two outlet ducts via by-pass volume discharges.
